Europäisches Patentamt

European Patent Office

Office européen des brevets

(19)

(11) Numéro de publication : **0 178 231 B1**

(12) **FASCICULE DE BREVET EUROPÉEN**

(45) Date de publication du fascicule du brevet :
11.10.89

(51) Int. Cl.⁴ : **F 16 L 15/00, E 21 B 17/042**

(21) Numéro de dépôt : 85401975.9

(22) Date de dépôt : 10.10.85

(54) **Joint fileté pour tube d'acier comportant un dispositif d'étanchéité au niveau des filetages.**

(30) Priorité : 10.10.84 FR 8415551

(43) Date de publication de la demande :
16.04.86 Bulletin 86/16

(45) Mention de la délivrance du brevet :
11.10.89 Bulletin 89/41

(84) Etats contractants désignés :
AT BE DE GB IT NL SE

(56) Documents cités :
CH–A– 557 499
FR–A– 2 201 741
US–A– 3 101 207

(73) Titulaire : **VALLOUREC Société Anonyme dite.**
**7, place du Chancelier Adenauer**
**F-75116 Paris (FR)**

(72) Inventeur : **Plaquin, Bernard**
**15, Rond Point des Acacias**
**F-59620 Aulnoye Aymeries (FR)**
Inventeur : **Bounie, Paul**
**12, rue Ampère**
**F-59620 Aulnoye Aymeries (FR)**

(74) Mandataire : **Nony, Michel**
**Cabinet Nony 29, rue Cambacérès**
**F-75008 Paris (FR)**

EP 0 178 231 B1

## Description

La présente invention est relative à un joint fileté pour tube d'acier, utilisable en particulier pour l'industrie pétrolière, qui comporte un dispositif d'étanchéité au niveau des filetages.

On sait que les joints pour tube utilisés dans l'industrie pétrolière doivent présenter un certain nombre de caractéristiques difficiles à concilier et qui consistent notamment à ce que le joint, tout en étant facile à usiner et peu sensible aux endommagements, permette d'assurer une étanchéité parfaite vis-à-vis de très fortes pressions qui s'exercent soit à l'intérieur soit à l'extérieur du joint et ceci même dans l'hypothèse où le joint est soumis à des flexions et à d'importantes tractions où compressions axiales.

Il est également nécessaire que les éléments de joint puissent être interchangés sans que cela ait une influence néfaste sur la qualité de l'étanchéité qui est obtenue lors du nouveau vissage du joint avec d'autres éléments.

Les joints filetés actuellement utilisés dans l'industrie pétrolière comportent tout d'abord des filetages mâle et femelle qui sont le plus souvent coniques (mais qui peuvent être également cylindriques) et qui assurent le maintien mécanique des deux éléments de tube l'un dans l'autre en supportant notamment les tractions axiales qui s'exercent sur le joint.

Dans la plupart des cas, les joints connus comportent aussi des butées dites de limitation de vissage qui ont pour effet d'immobiliser l'élément mâle par rapport à l'élément femelle dès que le couple de vissage prescrit a été obtenu.

Enfin, les joints de ce type comportent également au moins un couple de surfaces d'étanchéité qui sont placées de telle manière que lors du vissage du joint, ces surfaces d'étanchéité viennent au contact l'une de l'autre en étant appliquées l'une sur l'autre avec une pression suffisante pour obtenir l'étanchéité.

Dans la plupart des cas, celle-ci est obtenue par un contact de type métal-métal, mais dans certains cas, les surfaces d'étanchéité peuvent aussi être associées à des joints plastiques tels que par exemple des anneaux de PTFE qui par leur déformation assurent ou contribuent à l'étanchéité du joint.

Il est en particulier connu de placer de tels joints annulaires par exemple en PTFE dans une gorge pratiquée sur l'élément femelle soit au niveau des surfaces d'étanchéité (comme dans le US-A-3 850 461), soit même au niveau des filetages (comme dans le US-A-3 047 316), de manière à ce que lors du vissage du joint, l'élément mâle provoque la déformation plastique du joint qui s'adapte ainsi à la forme de l'élément mâle.

De tels joints plastiques présentent toutefois l'inconvénient d'être difficiles à mettre en place et en raison de la déformation qu'ils subissent de devoir dans la pratique être changés chaque fois que le joint est démonté puis remonté.

On connaît également, en particulier pour réaliser l'étanchéité de joints vissés destinés à l'alimentation des immeubles en eau ou au chauffage central, la technique consistant à recouvrir le filetage d'un des éléments à l'aide d'une matière thermoplastique qui est déformée lors du vissage pour assurer l'étanchéité. Des dispositifs de ce type sont connus d'après le CH-A-557 499 et le FR-A-2 201 741.

Ces dispositifs d'étanchéité sont destinés à remplacer l'usage de la filasse ou de ruban de PTFE cru qui sont conventionnellement enroulés sur le filetage de l'élément mâle avant son vissage dans l'élément femelle. Ils visent simplement à pré-positionner une matière thermoplastique au niveau du filetage d'un des éléments.

Dans ce cas également, compte tenu de la déformation importante subie par la matière plastique, il n'est généralement pas possible de dévisser le joint et de le revisser en interchangeant les éléments et de conserver la qualité de l'étanchéité requise.

La présente invention vise à conférer à des joints réutilisables pour tube d'acier destinés notamment à l'industrie pétrolière une étanchéité totale au niveau des filetages tout en ayant de plus l'avantage de conférer à ces joints un caractère plus monolithique en supprimant les différents jeux qui sont obligatoires dans les dispositifs connus jusqu'à ce jour.

On sait en effet, que pour jouer leur fonction première qui est de réunir mécaniquement les deux éléments de tube, chaque filet de l'élément mâle doit s'appliquer sur un filet correspondant de l'élément femelle obligatoirement dans une direction axiale et le plus souvent aussi dans une direction radiale.

Il en résulte que l'on peut décomposer le contour des filets d'un joint à l'état serré en, d'une part des surfaces qui sont fortement appliquées les unes sur les autres lors du vissage du joint, et des surfaces de l'élément mâle et de l'élément femelle qui se trouvent face à face à une certaine distance l'une de l'autre et entre laquelle se situe le jeu existant dans le filetage.

Il résulte de l'existence de cette partie du contour où les surfaces des éléments mâle et femelle sont écartées l'une de l'autre que, jusqu'à ce jour, il n'a pas été possible dans la pratique de réaliser une étanchéité satisfaisante au niveau des filetages de ce type de joint.

En effet, l'existence de ce jeu entre les surfaces correspondantes du filetage mâle et du filetage femelle crée un chemin de fuite de forme sensiblement hélicoïdale le long des filetages qui s'oppose à toute étanchéité à ce niveau.

La présente invention vise à obtenir une étanchéité au niveau des filetages en donnant aux filetages de l'élément mâle et de l'élément femelle des formes qui se correspondent parfaitement de telle sorte qu'il y ait un contact continu entre les surfaces de l'élément mâle et celles de l'élément femelle qui constituent l'ensemble des filetages.

La présente invention a pour objet un joint fileté pour tube d'acier utilisable en particulier pour l'industrie pétrolière du type dans lequel l'élément mâle et l'élément femelle sont réunis par des filetages tandis qu'une partie de la surface du contour de chaque filetage est fortement appliquée à l'état vissé sur le filetage de l'autre élément, caractérisé par le fait qu'un premier élément du joint comporte sur au moins une certaine longueur de son filetage un garnissage en matière synthétique dont le volume et la forme correspondent exactement au volume et à la forme du jeu qui existerait à l'état vissé entre ledit premier élément et le second élément dont les dimensions seraient à la limite des tolérances d'usinage qui permet le plus grand jeu possible à l'état monté du joint.

On comprend dans ces conditions, que le joint selon l'invention est constitué par un premier élément du joint ayant une structure composite et par un second élément (mâle ou femelle) conventionnel qui est totalement métallique, la surface du contour du filetage du premier, élément qui vient lors du vissage exercer des efforts de compression sur le filetage du second élément étant métallique, alors que la surface du contour du filetage du premier élément métallique qui lors du serrage laisserait subsister un jeu avec le second élément est garnie de matière synthétique de manière à ce que avec les tolérances d'usinage limites du second élément entièrement métallique, il n'existe plus aucun jeu lors du vissage des deux éléments selon l'invention.

On comprend que de cette manière, la masse de matière synthétique ainsi rapportée sur le premier élément n'a pas à être mise en forme lors du vissage pour s'adapter à la forme du filetage du second élément entièrement métallique comme cela était connu antérieurement mais, qu'elle subit simplement une légère compression qui résulte des tolérances d'usinage.

Le revêtement de matière synthétique qui est placé sur le second des éléments conformes à l'invention peut être obtenu de différentes manières.

Selon un premier procédé conforme à l'invention, on visse sur ou dans le premier élément qui doit recevoir le garnissage, un mandrin comportant un filetage dont les dimensions correspondent exactement aux limites de tolérance pour le second élément métallique qui doit être vissé sur ou dans le premier ; et à l'aide d'une pluralité de canaux disposés dans le mandrin, on injecte entre les deux filetages la matière synthétique qui en se fixant sur le premier élément, lui confère le caractère composite qui permet de réaliser l'étanchéité dans le filetage conforme à l'invention.

Selon un autre procédé, l'on obtient l'élément composite selon l'invention en fixant sur la partie métallique de ce premier élément composite que l'on désire réaliser une masse de matière synthétique dont on provoque la polymérisation, puis l'on usine cette matière synthétique de manière à ne la laisser subsister que dans les zones où les surfaces métalliques du filetage du second élément métallique ne doivent pas être appliquées contre les surfaces métalliques correspondantes du filetage du premier élément composite, et avec un pourtour qui permet d'occuper la totalité de l'espace libre restant entre le filetage mâle et le filetage femelle lors du serrage du joint.

Conformément à l'invention, il est avantageux d'utiliser comme matière synthétique des élastomères d'uréthane tels par exemple que du Polathane XPE ou le RIM 160 à structure microcellulaire), des polycarbonates, des polyoléfines, des polyamides.

Dans le but de mieux faire comprendre l'invention, on va en décrire maintenant à titre d'illustration et sans aucun caractère limitatif plusieurs modes de réalisation représentés sur le dessin annexé dans lequel :

— la figure 1 représente une vue en coupe d'un joint conventionnel pour l'industrie du pétrole,

— la figure 2 est une vue en coupe à plus grande échelle représentant un premier mode de réalisation des filets d'un joint conventionnel,

— la figure 3 représente une vue en coupe d'un second mode de réalisation des filets d'un joint conventionnel,

— la figure 4 représente une vue en coupe d'une troisième mode de réalisation des filets d'un joint conventionnel,

— la figure 5 représente une vue d'un couple de filets mâle et femelle selon l'invention,

— la figure 6 représente un dispositif qui permet de réaliser les filets selon l'invention,

— la figure 7 est une vue à plus grande échelle de la partie VII de la figure 6.

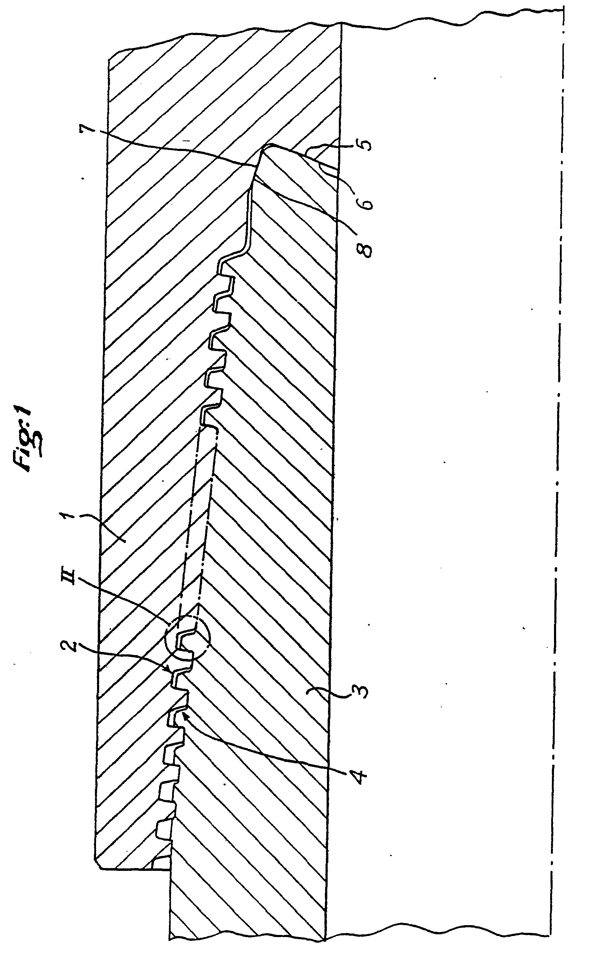

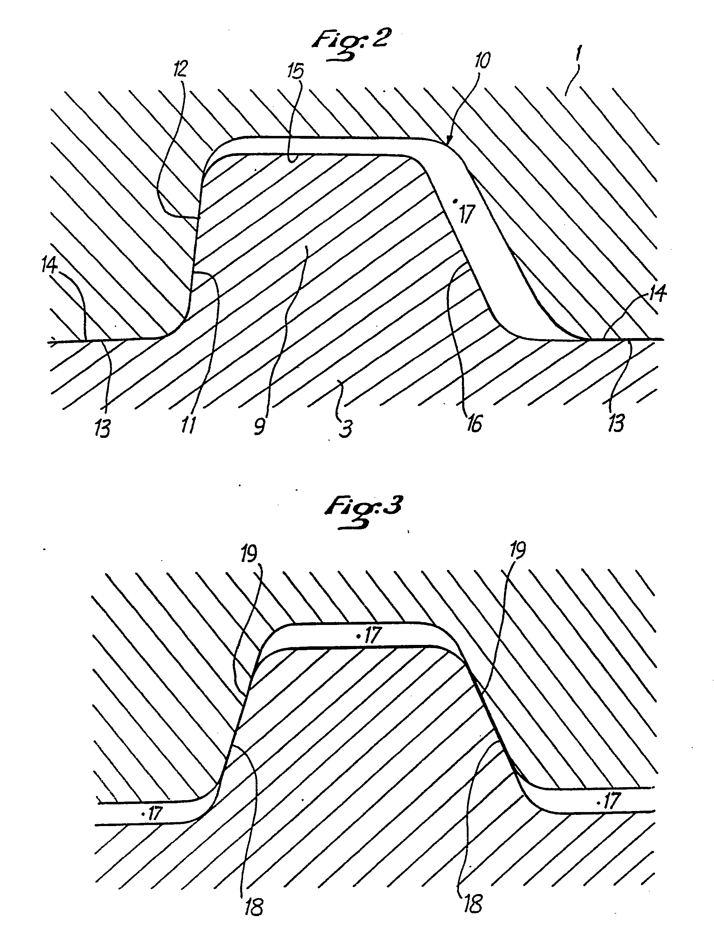

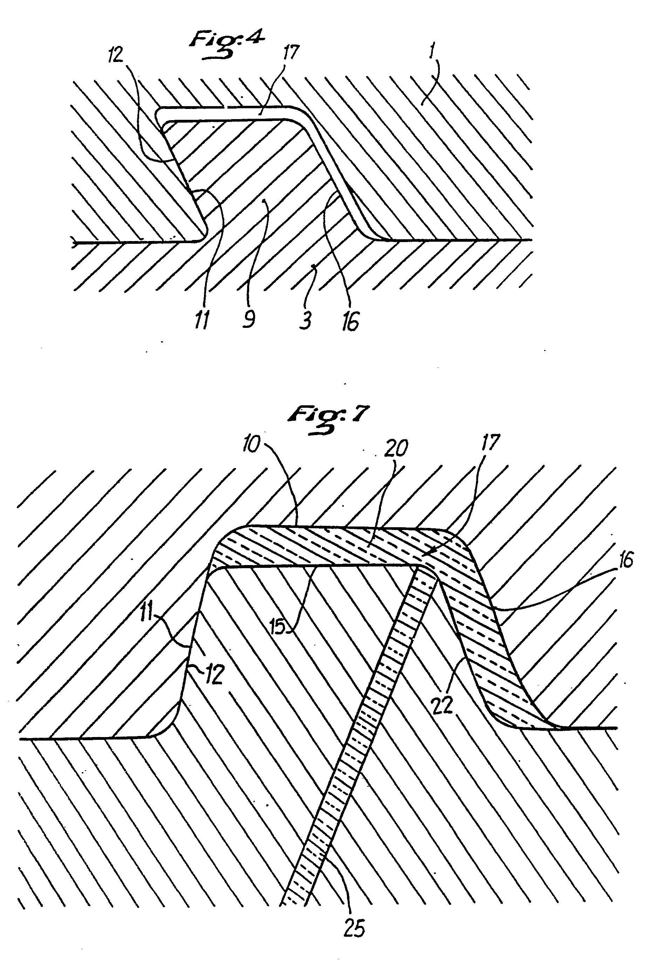

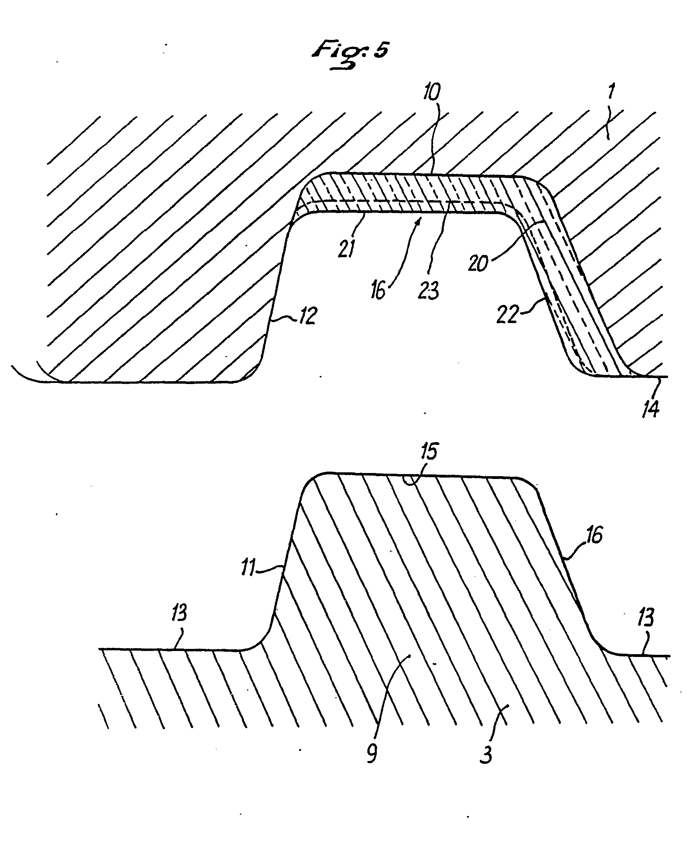

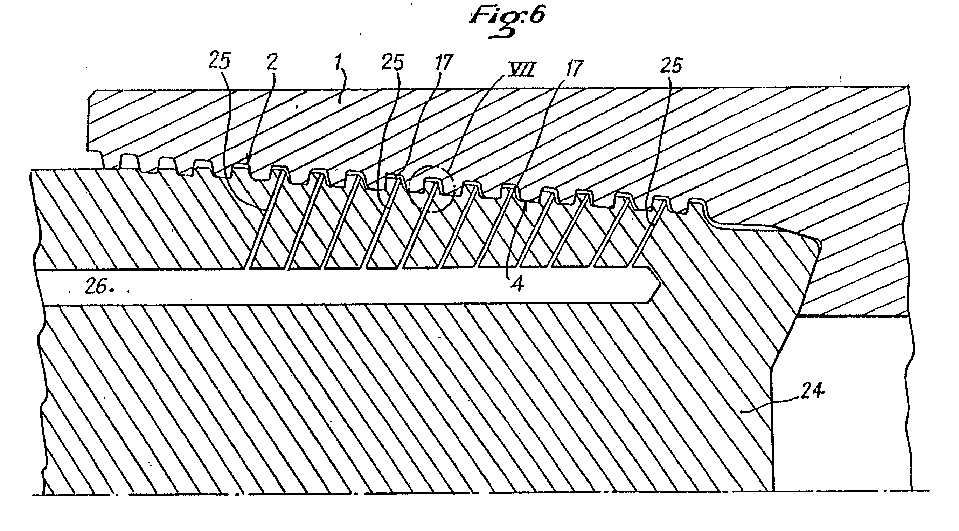

On a représenté en coupe sur la figure 1 un joint d'un type couramment utilisé dans l'industrie pétrolière.

Ce joint se compose d'un élément femelle ou manchon 1 qui comporte un filetage conique interne 2 dans lequel s'engage l'élément mâle 3 grâce à un filetage conique externe 4 correspondant.

Une butée 5 disposée à l'intérieur de l'élément femelle sert d'appui à l'extrémité 6 de l'élément mâle pour limiter le vissage tandis qu'un couple de surfaces 7 et 8 disposées respectivement sur l'élément femelle et l'élément mâle assure l'étanchéité du joint.

On a représenté à plus grande échelle sur la figure 2 un élément de filet du joint de la figure 1.

On voit sur la figure 2 comment le filet 9 de l'élément mâle 3 s'engage dans un évidement 10 de l'élément femelle 1. Compte tenu de l'existence de la butée de limitation de vissage 5, le flanc 11 du filet 9 se trouve fortement appliqué axialement contre le flanc 12 de l'évidement 10.

De même le fond de filet 13 de l'élément mâle 3 est fortement appliqué radialement contre le sommet de filet 14 de l'élément femelle en raison de la conicité des filetages et du frettage qui en résulte.

Dans le mode de réalisation représenté, ce sont les sommets des filetages femelles qui prennent appui contre les creux des filetages mâles mais cela pourrait être l'inverse si lors de l'usinage on avait réalisé la hauteur des dents 9 supérieure à celle des évidements 10.

On voit dans ces conditions, que si l'on considère le pourtour complet d'un filet de l'élément mâle on constate que sur les fonds de filet 13 et les flancs de filet 11, l'élément femelle s'applique fortement contre l'élément mâle ce qui assure l'étanchéité dans cette zone. Par contre, au niveau du sommet 15 et du flanc arrière 16 du filet 9 de l'élément mâle, il existe obligatoirement un jeu entre l'élément femelle et l'élément mâle. Ce jeu représenté en 17 sur la figure 2 fait qu'il n'a été jusqu'alors pas possible d'obtenir une étanchéité satisfaisante au niveau des filetages.

On comprend en effet que ce jeu qui est représenté sur la figure 2 au niveau d'un filet, se poursuit hélicoïdalement tout le long du filetage entre l'élément mâle et l'élément femelle.

On a représenté sur la figure 3 un autre mode de réalisation des filetages dans lesquels, le frettage qui se produit lors du vissage du filetage tronconique mâle dans le filetage tronconique femelle, s'exerce sur les flancs latéraux 18 et 19 des filets en laissant des espaces libres 17 sur les sommets tant des filetages mâles que des filetages femelles.

On a représenté sur la figure 4 un autre mode de réalisation des filetages qui diffère du mode de réalisation représenté sur la figure 2 par le fait que le flanc porteur 11 de l'élément mâle et le flanc porteur 12 de l'élément femelle forment un angle incliné vers l'avant par rapport au plan radial du joint.

Ce type de filetage laisse également subsister un jeu 17 sur le sommet du filet mâle 9 et sur son flanc arrière 16.

On a représenté sur la figure 5 comment l'on peut obtenir une étanchéité parfaite au niveau des filetages grâce à l'invention.

On retrouve sur la figure 5 le filet 9 de l'élément mâle, son flanc porteur 11, son sommet 15, son flanc arrière 16 et ses creux de filet 13.

Dans le mode de réalisation représenté, l'élément mâle est un élément de joint conventionnel alors que l'élément femelle 1 est un élément composite réalisé conformément à l'invention pour coopérer avec l'élément mâle.

On retrouve sur l'élément femelle 1 le creux de filet 10 avec son flanc porteur 12 et les sommets de filet 14.

Conformément à l'invention, le creux du filet 10 est revêtu d'une garniture en matière synthétique 20 qui adhère à la partie métallique de l'élément femelle 1 et dont le fond 21 et le flanc arrière 22 ont une forme qui correspond au profil à l'état vissé du filet de l'élément mâle dont les dimensions sont à la limite inférieure des tolérances prévues pour l'usinage du filetage de l'élément mâle.

Il en résulte que lorsque l'on visse sur l'élément femelle 1 un élément mâle qui est à la limite inférieure des tolérances, il ne subsiste aucun espace libre entre l'élément femelle et l'élément mâle, compte tenu du fait que le contact avec l'élément mâle est assuré soit par les parties métalliques 12, 14 de l'élément femelle soit par le pourtour 21, 22 de la garniture en matière synthétique de l'élément mâle.

On comprend toutefois, que dans la quasi-totalité des cas, lors du vissage, le filetage de l'élément mâle comprime légèrement la garniture en matière synthétique 20 de l'élément femelle en renforçant l'étanchéité qui est obtenue.

C'est ainsi que l'on a représenté par la ligne interrompue 23 sur l'élément femelle le pourtour du filetage de l'élément mâle à l'état vissé du joint.

On comprend dans ces conditions, que le joint selon l'invention, assure une étanchéité parfaite au niveau du filetage car la dimension d'un filet de l'élément mâle varie le long du parcours hélicoïdal de ce filet à l'intérieur des tolérances de fabrication de telle sorte qu'à au moins une zone de ce parcours hélicoïdal, le sommet 15 et le flanc arrière du filet de l'élément mâle assurent une compression suffisante de la matière synthétique 20 pour assurer une étanchéité parfaite le long du filetage.

On comprend également dans ces conditions, que conformément à l'invention, il n'est pas nécessaire de réaliser la garniture 20 en matière synthétique tout le long du filetage et que l'on peut se contenter de réaliser cette garniture à un endroit donné.

Cependant, il est néanmoins intéressant de réaliser cette garniture de matière synthétique 20 tout le long du filetage de manière à améliorer le monolithisme du joint principalement dans le cas où ce dernier est réalisé avec un ou plusieurs filetages cylindriques, qui comme on le sait, permettent des déplacements latéraux de l'élément mâle par rapport à l'élément femelle.

On a représenté sur les figures 6 et 7 un dispositif qui permet de réaliser l'élément femelle composite représenté sur la figure 5.

On voit sur la figure 6 une coupe représentant l'élément femelle 1 sur lequel on veut réaliser l'apport de matière synthétique 20 pour obtenir l'étanchéité selon l'invention.

A cet effet, l'on visse dans l'élément femelle un mandrin 24 dont le filetage a été usiné de manière précise pour correspondre exactement aux dimensions de tolérance de fabrication minimales de l'élément mâle qui doit être accouplé avec l'élément femelle.

Le mandrin 24 est vissé dans l'élément 1 avec un couple de vissage suffisant pour assurer la mise en contact des flancs et des fonds et sommets porteurs des filetages mâle et femelle concernés.

Le mandrin est muni d'une pluralité de canaux 25 qui aboutissent dans l'espace 17 existant entre le filetage externe du mandrin 24 et le filetage 2 de l'élément femelle 1, cette multitude de canaux étant réunie à un canal principal 26 qui permet d'injecter une matière synthétique sous-pression dans l'espace 17.

On a représenté à plus grande échelle sur la figure 7 comment le canal 25 aboutit dans l'espace 17 compris entre le sommet 15 et le flanc arrière non porteur 22 du filet de l'élément mâle et le fond 10 et le flanc arrière non porteur 16 de l'élément femelle pour y injecter la masse de matière synthétique 20 qui adhère à l'élément femelle et dont la surface libre correspond exactement à la forme du filet correspondant aux dimensions minimales compatibles avec les tolérances de fabrication.

Pour obtenir que la matière synthétique 20 n'adhère pas au mandrin lors du démoulage par dévissage, il suffit de recouvrir la surface de ce dernier d'une matière anti-adhérente.

Conformément à l'invention, la matière synthétique utilisée est un élastomère d'uréthane connu sous le nom de Polathane XPE.

Dans un autre mode de mise en œuvre de l'invention, il est possible d'injecter de la matière synthétique de manière à ce qu'elle garnisse complètement et même qu'elle recouvre le filetage de l'élément femelle, en utilisant par exemple un mandrin dépourvu de filetage puis lorsque la matière synthétique 20 a durci, de procéder à un usinage mécanique de manière à ne laisser subsister que la matière synthétique qui correspond à ce qui est représenté sur la figure 7.

Il est bien entendu que les modes de réalisation qui ont été décrits ci-dessus ne présentent aucun caractère limitatif et qu'ils pourraient en recevoir toutes modifications désirables sans sortir pour cela du cadre de l'invention.

En particulier, il est clair que bien que dans les modes de réalisation décrits, ce soit l'élément femelle qui conformément à l'invention soit composite du fait qu'il a reçu une couche de matière synthétique, il est possible également d'appliquer cette garniture de matière synthétique sur l'élément mâle (l'élément femelle restant conventionnel), en effectuant cette application par exemple à l'aide d'un mandrin femelle.

Il va enfin de soi que l'on pourrait sans sortir du cadre de l'invention réaliser deux éléments composites, bien que cette solution soit plus compliquée à mettre en œuvre.

## Revendications

1. Joint fileté démontable et interchangeable pour tube d'acier utilisable en particulier pour l'industrie pétrolière du type dans lequel l'élément mâle (3) et l'élément femelle (1) sont réunis par des filetages (2, 4) tandis qu'une partie (11, 13) de la surface du contour de chaque filetage est fortement appliquée à l'état vissé sur le filetage (12, 14) de l'autre élément, une matière synthétique étant placée entre les filetages pour assurer l'étanchéité, caractérisé par le fait qu'un premier élément (1) du joint a une structure composite et comporte sur au moins une certaine longueur de son filetage un garnissage (20) en matière synthétique dont le volume et la forme correspondent exactement au volume et à la forme du jeu (17) qui existerait à l'état vissé entre la partie métallique dudit élément composite (1) et le second élément (3) dont les dimensions seraient à la limite des tolérances d'usinage qui permet le plus grand jeu possible à l'état monté du joint.

2. Joint selon la revendication 1, caractérisé par le fait que la matière synthétique constituant le garnissage est constituée par un élastomère d'uréthane tel que le Polathane XPE ou le RIM 160 à structure microcellulaire, un polycarbonate, une polyoléfine ou un polyamide.

3. Procédé de fabrication du joint selon l'une quelconque des revendications 1 ou 2, caractérisé par le fait que l'on visse sur ou dans le premier élément (1) qui doit recevoir le garnissage (20), un mandrin (24) comportant un filetage (4) dont les dimensions correspondent exactement aux limites de tolérance pour le second élément métallique (3) qui doit être vissé sur ou dans le premier ; et qu'à l'aide d'une pluralité de canaux (25) disposés dans le mandrin, on injecte entre les deux filetages (2, 4) la matière synthétique (20), qui, en se fixant sur le premier élément (1), lui confère le caractère composite qui permet de réaliser l'étanchéité dans le filetage conforme à l'invention.

4. Procédé de fabrication du joint selon l'une quelconque des revendications 1 ou 2, caractérisé par le fait que l'on obtient le premier élément composite (1) selon l'invention en fixant sur la partie métallique de ce premier élément une masse de matière synthétique (20) dont on provoque la polymérisation, puis que l'on usine cette matière synthétique de manière à ne la laisser subsister que dans les zones où les surfaces métalliques du filetage du second élément métallique (15, 16) ne doivent pas être appliquées contre les surfaces métalliques correspondantes du filetage du premier élément composite, et avec un pourtour (21, 22) qui permet d'occuper la totalité de l'espace libre restant entre le filetage mâle et le filetage femelle lors du serrage du joint.

## Claims

1. A dismountable and interchangeable threaded joint for steel pipe, which may be employed in particular for the oil industry and is of the type in which the male member (3) and the female member (1) are joined by threads (2, 4) whilst one portion (11, 13) of the surface of the contour of each thread is fitted tightly in the screwed-together state against the thread (12, 14) on the other member, synthetic matter being placed between the threads for ensuring oiltightness, characterized by the fact that a first member (1) of the joint has a composite structure and includes over at least a certain length of its thread a lining (20) of synthetic matter the volume and shape of which correspond exactly with the volume and shape of the play (17) which would exist in the screwed-together state between the metallic portion of the said composite member (1) and the second member (3) the dimensions of which were at the limit of the machining tolerances which allow the largest possible play in the mounted state of the joint.

2. A joint as in Claim 1, characterized by the fact that the synthetic matter constituting the lining consists of a urethane elastomer such as Polathane XPE or RIM 160 having a microcellular structure, a polycarbonate, a polyolefin or a polyamide.

3. A method of manufacture of the joint as in either of the Claims 1 or 2, characterized by the fact that over or into the first member (1) which is to receive the lining (20) a mandrel (24) is screwed, having a thread (4) the dimensions of which correspond exactly with the limits of tolerance for the second metallic member (3) which is to be screwed over or into the first, and that with the aid of a plurality of channels (25) arranged in the mandrel the synthetic matter (20) is injected between the two threads (2, 4) and in attaching itself to the first member (1) confers upon it the composite character which enables oiltightness in the thread to be effected in accordance with the invention.

4. A method of manufacture of the joint as in either of the Claims 1 or 2, characterized by the fact that the first composite member (1) in accordance with the invention is obtained by attaching to the metallic portion of this first member a mass of synthetic matter (20) of which one causes polymerisation and then this synthetic matter is machined so as to let it persist only in the zones where the metallic areas of the thread on the second metallic member (15, 16) are not to be fitted against the corresponding metallic areas of the thread on the first composite member, and with an outline (21, 22) which enables the whole of the free space remaining between the male thread and the female thread to be occupied upon tightening the joint.

**Patentansprüche**

1. Zerlegbare und austauschbare Gewindeverbindung für ein Stahlrohr, die insbesondere für die Erdölindustrie verwendbar ist, des Typs, bei dem das männliche Element (3) und das weibliche Element (1) durch Gewinde (2, 4) vereinigt sind, während ein Teil (11, 13) der Oberfläche des Umrisses jedes Gewindeganges im verschraubten Zustand an den Gewindegang (12, 14) stark angedrückt ist, wobei ein Kunststoff zwischen den Gewindegängen zur Sicherung der Abdichtung angeordnet ist, dadurch gekennzeichnet, daß ein erstes Element (1) der Verbindung einen zusammengesetzten Aufbau hat und auf wenigstens einer bestimmten Länge seines Gewindes eine Beschichtung (20) aus Kunststoff aufweist, deren Volumen und Form genau dem Volumen und der Form des Spielraumes (17) entsprechen, der im verschraubten Zustand zwischen dem metallischen Teil dieses zusammengesetzten Elements (1) und dem zweiten Element (3) existieren würde, dessen Abmessungen an der Grenze der Bearbeitungstoleranzen wären, die den größtmöglichen Spielraum im montierten Zustand der Verbindung gestattet.

2. Verbindung nach dem Anspruch 1, dadurch gekennzeichnet, daß der die Beschichtung bildende Kunststoff aus einem Urethanelastomer, wie z. B. dem Polathane XPE oder dem RIM 160 mit Mikrozellengefüge, einem Polycarbonat, einem Polyolefin oder einem Polyamid besteht.

3. Verfahren zur Herstellung der Verbindung nach irgendeinem der Ansprüche 1 oder 2, dadurch gekennzeichnet, daß man auf oder in das erste Element (1), das die Beschichtung (20) erhalten soll, einen Dorn (24) mit einem Gewinde (4) schraubt, dessen Abmessungen genau den Toleranzgrenzen für das zweite metallische Element (3) entsprechen, das auf oder in das erste geschraubt werden soll, und daß man mit Hilfe einer Mehrzahl von im Dorn angeordneten Kanälen (25) zwischen die beiden Gewinde (2, 4) den Kunststoff einspritzt, der, indem er sich auf dem ersten Element (1) festlegt, diesem den zusammengesetzten Charakter verleiht, der die Schaffung der Abdichtung im Gewinde gemäß der Erfindung ermöglicht.

4. Verfahren zur Herstellung der Verbindung nach irgendeinem der Ansprüche 1 oder 2, dadurch gekennzeichnet, daß man das erste, zusammengesetzte Element (1) gemäß der Erfindung erhält, indem man auf dem metallischen Teil dieses ersten Elements eine Masse aus Kunststoff (20) befestigt, dessen Polymerisation man herbeiführt, daß man dann diesen Kunststoff so bearbeitet, daß man ihn nur in den Zonen, wo die metallischen Oberflächen des Gewindes des zweiten metallischen Elements (15, 16) nicht gegen die entsprechenden metallischen Oberflächen des Gewindes des ersten, zusammengesetzten Elements angedrückt werden sollen, und mit einem Umfang (21, 22) verbleiben läßt, der die Einnahme der Gesamtheit des zwischen dem männlichen Gewinde und dem weiblichen Gewinde beim Schließen der Verbindung verbleibenden freien Raums ermöglicht.

Fig.1

EP 0 178 231 B1

*Fig. 2*

*Fig. 3*

*Fig.4*

*Fig.7*

Fig. 5

*Fig.6*

EP 0 178 231 B1